# EUROPÄISCHE PATENTSCHRIFT

(11) **EP 2 945 333 B1**
(45) Veröffentlichungstag und Bekanntmachung des Hinweises auf die Patenterteilung: **07.03.2018**
(21) Anmeldenummer: 14168164.3
(22) Anmeldetag: 13.05.2014
(51) Int. Cl.: H04L 12/931, H04L 29/06

(54) **Übermittlungsverfahren für IP-Netze mittels VLAN-Tag**
Transmission method for IP networks by means of VLAN tag
Procédé de transmission pour des réseaux IP au moyen de balise VLAN

(43) Veröffentlichungstag der Anmeldung: 18.11.2015
(73) Patentinhaber: Secunet Security Networks Aktiengesellschaft, 45138 Essen (DE)
(72) Erfinder: Martius, Kai, Dr. Ing., 01738 Dorfhain (DE); Marx, Jörg, Dr. Inf., 01099 Dresden (DE); Richter, Birk, Dr. Inf., 01277 Dresden (DE); Hoenisch, Mark, Dipl. Ing., 01108 Dresden (DE); Ziebarth, Frank, 15859 Storkow (Mark) (DE)
(74) Vertreter: Rohmann, Michael

(56) Entgegenhaltungen:
- US-A1- 2006 056 297
- US-A1- 2008 259 924
- US-A1- 2010 228 974
- US-A1- 2013 142 201

## Beschreibung

Die Erfindung betrifft ein Übermittlungsverfahren für Netze der Vermittlungsschicht, vorzugsweise für IP-Netze.

Aus der Praxis sind diese Übermittlungsverfahren in verschiedenen Ausführungen bekannt. Eine Teilmenge dieser Ausführungen wird recht generisch als Virtual Private Network (VPN) bezeichnet. Hiermit ist gemeint, dass zwei Punkte eines Netzes über einen unsicheren Weg sicher miteinander verbunden werden. Dabei muss keine zu dieser Verbindung ausschließlich zugehörige physikalische Leitung existieren, weil die Übertragung von dem physikalischen Netz entkoppelt ist. Damit ist gemeint, dass Dateneinheiten zwischen Absender und Empfänger dynamisch weitergeleitet werden. Die individuellen Wegstrecken der einzelnen Dateneinheiten können daher sehr unterschiedlich sein.

Dies wird durch abstrahierte Protokollsprachen wie dem IP-Protokoll ermöglicht. Das IP-Protokoll ist der Vermittlungsschicht (Schicht 3) des Open Systems Interconnection Model (OSI-Modell) zugeordnet. Es ermöglicht auf Grund seiner Abstraktion die Übermittlung von Daten unabhängig von dem jeweils zugrundeliegenden physikalischen Netz. Die Sicherungsschicht hingegen (Schicht 2 des OSI-Modells) ist bereits deutlich stärker Hardware orientiert und stützt sich u.a. auf MAC-Adressen. Auch die Protokollsprachen der Sicherungsschicht ermöglichen eine Übermittlung von Daten. Im Vergleich zu den Protokollsprachen der Vermittlungsschicht sind die Protokollsprachen der Sicherungsschicht aber einfacher zu konfigurieren und damit tendenziell auch sicherer. Demgegenüber sind die Protokollsprachen der Vermittlungsschicht komplexer, weisen aber dafür auch mehr Bedienkomfort auf.

In bestimmten Umgebungen sollen VPN-Tunnel die Vorteile beider Schichten miteinander kombinieren. Bei einer bekannten Ausführungsform wird ein Tunnel der Vermittlungsschicht definiert, über welchen die zu versendenden Dateneinheiten geführt werden. Die zu versendenden Dateneinheiten weisen zunächst ein inneres IP-Paket (Vermittlungsschicht) auf, welches sich innerhalb eines Ethernet-Frames (Sicherungsschicht) befindet. Dieses Ethernet-Frame wiederum entspricht Nutzdaten eines äußeren IP-Paketes, welches neben diesen Nutzdaten noch IP-Kopfdaten aufweist. Somit ist die äußere Hülle dieser Dateneinheit in einer Protokollsprache der Vermittlungsschicht abgefasst, wohingegen die Nutzdaten von außen betrachtet in der Protokollsprache der Sicherungsschicht abgefasst sind. Es werden somit Daten der Sicherungsschicht über einen Tunnel der Vermittlungsschicht getunnelt. Dies erlaubt zunächst die Nutzung der kombinierten Vorteile der Sicherungs- und der Vermittlungsschicht.

Eine solche Ausführungsform ist aus US 2013/0142201 A1 bekannt. Demnach wird vorgeschlagen, Sicherungsschicht-Adressinformationen in Form eines VLAN-Tags mittels der Protokolle generic routing encapsulation (GRE) bzw. network virtualization using generic routing encapsulation (NVGRE) einzukapseln. Demzufolge befinden sich Daten der Sicherungsschicht in Paketen der Vermittlungsschicht.

Nachteilig an Verfahren wie GRE und NVGRE ist es, dass auf Grund von Sicherungsschicht-Daten innerhalb von Vermittlungsschicht-Daten eine gravierende Verletzung des OSI-Schichtenmodells in Kauf genommen wird. Dies wiederum verursacht Risiken beispielsweise hinsichtlich Timing und Paketgrößen und wirkt sich dadurch nachteilig auf die Leistungsfähigkeit des Übermittlungsverfahrens aus.

Demgegenüber liegt der Erfindung das technische Problem zu Grunde, ein Übermittlungsverfahren der eingangs genannten Art anzugeben, bei dem die vorstehend beschriebenen Nachteile der bekannten Ausführungsform effektiv vermieden werden können.

Zur Lösung dieses technischen Problems lehrt die Erfindung ein Übermittlungsverfahren für Netze der Vermittlungsschicht, vorzugsweise für IP-Netze, mit einem ersten Rechner und einem zweiten Rechner, wobei ein Tunnel der Vermittlungsschicht zwischen dem ersten Rechner und dem zweiten Rechner definiert wird, wobei der Tunnel einen ersten Tunnelendpunkt umfasst, welcher dem ersten Rechner zugeordnet ist, wobei der Tunnel einen zweiten Tunnelendpunkt umfasst, welcher dem zweiten Rechner zugeordnet ist, wobei der erste Rechner Dateneinheiten an den zweiten Rechner über den Tunnel versendet, wobei die Dateneinheiten Datenpakete der Vermittlungsschicht umfassen, wobei die Datenpakete der Vermittlungsschicht Kopfdaten und Nutzdaten aufweisen, wobei die Dateneinheiten vor dem Tunnelversand mit Sicherungsschicht-Adressinformationen versehen werden und wobei die Sicherungsschicht-Adressinformationen von dem ersten Tunnelendpunkt durch Vermittlungsschicht-Adressinformationen ersetzt werden, wobei die Sicherungsschicht-Adressinformationen den Tunnel bestimmen und wobei der zweite Tunnelendpunkt die Sicherungsschicht-Adressinformationen rekonstruiert.

Die Ausdrücke "Vermittlungsschicht" und "Sicherungsschicht" beziehen sich auf die Schichten 3 bzw. 2 des OSI-Modells. Demzufolge umfasst die Vermittlungsschicht beispielsweise die Protokolle ICMP, IGMP, IP, IPsec, oder IPX. Die Sicherungsschicht umfasst beispielsweise die Protokolle Ethernet, Token Ring, FDDI, ARCNET und weitere.

Der Ausdruck "Netz" meint den ganz allgemeinen Zusammenschluss von Rechnern. "Rechner" im Sinne der Erfindung sind jegliche digitale Datenverarbeitungseinheiten. Hierunter fallen etwa PCs, Server, Thin und Fat Clients, Smartphones, digitale Uhren, digitale Brillen (z.B. Google Glasses) und dergleichen mehr. Letztlich sind hiermit alle diejenigen digitalen Datenverarbeitungseinheiten gemeint, welche an Netze der Vermittlungsschicht angeschlossen werden können.

Der Ausdruck "Tunnel" meint die Einbettung von Daten eines ersten Kommunikationsprotokolls in Daten eines zweiten Kommunikationsprotokolls. Eine Verschlüsselung kann, muss aber nicht von diesem Begriff umfasst sein. Der Ausdruck "Tunnelendpunkt" ist funktional zu verstehen und meint nichts anderes als den Endpunkt des Tunnels. Dieser Tunnelendpunkt kann beispielsweise ein elektronisches Gerät in Form eines VPN-Gateways sein, welches als Einzelgerät mit dem Netz der Vermittlungsschicht verbindbar ist. Der Tunnelendpunkt kann aber auch ohne weiteres in einem Rechner untergebracht werden und mit diesem eine Einheit bilden. Der Tunnelendpunkt kann über das Netz der Vermittlungsschicht mit einem zweiten Tunnelendpunkt derart verbunden werden, so dass beide Tunnelendpunkte einen Tunnel definieren. Dabei kann jeder Tunnelendpunkt mit mehreren Tunnelendpunkten verbunden werden, so dass von jedem Tunnelendpunkt mehrere Tunnel ausgehen können.

Insbesondere können die Rechner und Tunnelendpunkte bidirektional arbeiten. Folglich können auch der zweite Rechner und der zweite Tunnelendpunkt Dateneinheiten versenden. Dementsprechend können der erste Rechner und der erste Tunnelendpunkt auch Dateneinheiten empfangen.

Die Formulierung "Dateneinheiten" meint nichts anderes als einen ganz allgemein zu verstehenden abgeschlossenen Block an Daten. Hierunter fallen beispielsweise Datenpakete der Vermittlungsschicht oder Datenrahmen der Sicherungsschicht. Zudem umfasst dieser Begriff auch Kombinationen von Datenpaketen und Datenrahmen sowie darüber hinaus gehende zusätzliche Daten. Sowohl Datenpakete als auch Datenrahmen weisen Kopf- und Nutzdaten auf, wobei insbesondere die Kopfdaten gemäß der einschlägigen Protokollsprachen der Sicherungs- und Vermittlungsschicht definiert sind.

Die Formulierung "Sicherungsschicht-Adressinformation" schließlich meint Informationen auf Ebene der Sicherungsschicht, welche der Zielbestimmung der Dateneinheiten dienen. Hierbei kann es sich um vollständige Kopfdaten (Header) handeln oder auch nur um Teile von Headern. Der Begriff "Vermittlungsschicht-Adressinformationen" ist analog zu den Sicherungsschicht-Adressinformationen zu verstehen.

Die rekonstruierten Sicherungsschicht-Adressinformationen können identisch mit den Sicherungsschicht-Adressinformationen sein, mit welchen vor dem Tunnelversand die Dateneinheit versehen wurde. Die rekonstruierten Sicherungsschicht-Adressinformationen können aber auch von den Sicherungsschicht-Adressinformationen vor dem Tunnelverband abweichen und insbesondere Abbildungsvorschriften darstellen. Die Rekonstruktion geschieht aus der Kenntnis des zweiten Tunnelendpunkts von dem Tunnel, über welchen die entsprechende Dateneinheit empfangen wurde. Folglich wird die Zuordnung wieder rückgängig gemacht und es werden die Dateneinheiten wieder mit den Sicherungsschicht-Adressinformationen versehen. Insbesondere werden die Sicherungsschicht-Adressinformationen den Datenpaketen vorangestellt. Vorzugsweise umfassen die rekonstruierten Sicherungsschicht-Adressinformationen eine standardisierte Auszeichnung und besonders vorzugsweise ein VLAN-Tag eines Ethernet Headers entsprechend IEEE 802.1Q.

Das erfindungsgemäße Übermittlungsverfahren weist mehrere Vorteile auf. Auf Grund der Kombination eines Tunnels der Vermittlungsschicht mit Dateneinheiten, deren Sicherungsschicht-Adressinformationen von dem ersten Tunnelendpunkt durch Vermittlungsschicht-Adressinformationen ersetzt werden, besteht die grundsätzliche Möglichkeit, die Vorteile beider Schichten auszunutzen. Dies äußert sich einerseits im Bedienkomfort, welcher durch die Vermittlungsschicht bereitgestellt wird und andererseits darin, dass auf Grund der Sicherungsschicht-Adressinformationen besonders einfach virtuelle Leitungen, also Tunnel, ausgewählt werden können. Dies bedingt eine einfachere Konfiguration, welche wiederum einen Sicherheitsvorteil bietet.

Zudem wird auf eine Verletzung des OSI-Schichtenmodells verzichtet. Denn die Sicherungsschicht-Adressinformationen werden von dem ersten Tunnelendpunkt, also vor Durchtritt des Tunnels, durch Vermittlungsschicht-Adressinformationen ersetzt. Dadurch werden beispielsweise Timing-Probleme bzw. Probleme bei der Handhabung der Dateneinheiten (z.B. Paketgrößenkonflikte) vermieden, wodurch wiederum die Leistungsfähigkeit des Übermittlungsverfahrens gesteigert wird.

Es wird empfohlen, dass die Sicherungsschicht-Adressinformationen vor dem Tunnelversand den Datenpaketen vorangestellt werden. Dabei meint der Ausdruck "voranstellen", dass die Sicherungsschicht-Adressinformationen an einer herausgehobenen Stelle, insbesondere am Anfang, der Dateneinheit angeordnet werden. Dabei meint "am Anfang", dass die Sicherungsschicht-Adressinformationen von den Rechnern bzw. Tunnelendpunkten zuerst, also vor den angehängten Datenpaketen, gelesen werden. Das Voranstellen geschieht vor dem Tunnelversand, weshalb auch die an dem Transport beteiligten Rechner vor dem Tunnelversand in der Lage sein müssen, die Sicherungsschicht-Adressinformationen den Datenpaketen voranzustellen. Insofern betrifft die Erfindung nicht nur Tunnel- bzw. Tunnelendpunkte, sondern auch die beteiligten Rechner.

Es liegt im Rahmen der Erfindung, dass die Dateneinheiten anhand von den Sicherungsschicht-Adressinformationen zu dem Tunnel geführt werden. Besonders vorzugsweise bestimmen die Sicherungsschicht-Adressinformationen den Tunnel eineindeutig. Somit wird über die Sicherungsschicht-Adressinformationen vor allem eine Zuordnung von Dateneinheiten zu dem jeweiligen Tunnel vorgenommen.

Vorzugsweise umfassen die Sicherungsschicht-Adressinformationen eine standardisierte Auszeichnung. Hierbei wird unter dem Ausdruck "Auszeichnung" ein "Tag" verstanden, mit welchem Dateneinheiten mit zusätzlichen Informationen versehen werden. Diese zusätzlichen Informationen bilden einen abgeschlossenen Datenblock, welcher sinnbildlich auch als Etikett verstanden werden kann.

Letztlich müssen die Sicherungsschicht-Adressinformationen den Kopfdaten der die Datenpakete umfassenden Dateneinheiten zugerechnet werden. Ebenso wie die Kopfdaten der Datenpakete weisen auch die Auszeichnungen einen definierten Aufbau auf, welcher es den beteiligten Rechnern bzw. Tunnelendpunkten ermöglicht, diese Auszeichnungen auch lesen zu können. Da die Auszeichnung standardisiert ist, wird ein größtmöglicher Kreis an Rechnern bzw. Tunnelendpunkten mit geringem Aufwand in der Lage sein, die Auszeichnung lesen zu können.

Vorzugsweise entspricht die standardisierte Auszeichnung einem VLAN-Tag eines Ethernet Headers entsprechend der Norm IEEE 802.1Q. Das Kürzel "VLAN" steht für Virtual Local Area Network. Die genannte Norm bestimmt vier Bytes innerhalb des Ethernet-Frames als VLAN-Tag. Von diesen insgesamt 32 Bit dienen 12 Bit zur Bestimmung einer VLAN-ID, wodurch insgesamt die Definition von 4.094 VLANs möglich ist. Weitere 16 Bit dienen der Protokoll-ID, also der Anzeige, dass die Dateneinheit nach dem Standard IEEE 802.1Q gelesen werden soll. Die restlichen 4 Bits dienen, wie auch 8 weitere optional mögliche Bits, im Wesentlichen Prioritätsinformationen hinsichtlich der jeweiligen Dateneinheit. So können beispielsweise Sprachdaten von IP-Telefonie bevorzugt weitergeleitet werden.

In einer bevorzugten Ausführungsform werden die Datenpakete vom ersten Tunnelendpunkt verschlüsselt und vom zweiten Tunnelendpunkt entschlüsselt. Dabei meint der Ausdruck "Verschlüsselung" kryptografische Verfahren, welche der Informationssicherheit im Sinne von Integrität und Vertraulichkeit dienen. Demzufolge sollen mit der Verschlüsselung die Ziele der Unversehrtheit der Daten einerseits sowie die Beschränkung auf einen bestimmten Empfängerkreis erreicht werden.

Gemäß einer bevorzugten Ausführungsform wird die Verschlüsselung durch kryptografische Anker unterstützt. Kryptografische Anker umfassen beispielsweise Chipkarten mit dazugehörigen persönlichen Identifikationsnummern (PINs). Als kryptografische Anker kommen darüber hinaus beispielsweise auch Fingerabdrücke, Netzhaut-Scans und dergleichen mehr in Betracht.

Bevorzugt ist der Tunnel als ein IP-Tunnel ausgebildet. Dabei meint das Kürzel "IP" die standardisierte Protokollsprache der Vermittlungsschicht des OSI-Schichtenmodells. Besonders bevorzugt ist der Tunnel als IPsec-Tunnel gestaltet. Unter dem Kürzel "IPsec" ist die entsprechend standardisierte Protokollsprache der Vermittlungsschicht des OSI-Schichtmodells gemeint. Besonders vorzugsweise wird der Tunnel als ein IPsec-Tunnel mit einer Schlüsselverwaltung nach IKEv2 (Internet-Key-Exchange-Protokoll, Version 2) ausgebildet.

Es liegt im Rahmen der Erfindung, dass die Vermittlungsschicht-Adressinformationen von dem zweiten Tunnelendpunkt aus der Dateneinheit entfernt werden. Nach der Übertragung durch den Tunnel der Vermittlungsschicht sind die durch den ersten Tunnel vorangestellten Vermittlungsschicht-Adressinformationen obsolet, weshalb sie dann der Einfachheit halber entfernt werden.

Gemäß einer bevorzugten Ausführungsform wird der erste Tunnelendpunkt als Teil eines ersten lokalen VLANs definiert. Innerhalb des lokalen VLANs befindet sich wenigstens der erste Rechner sowie vorzugsweise weitere Rechner. Der oder die Rechner können gruppiert und insbesondere weitere, dem ersten lokalen VLAN hierarchisch untergeordnete lokale VLANs bilden. Die hierarchisch untergeordneten VLANs mögen beispielsweise durch Netzwerkweichen (Switches) definiert werden. Die Sicherungsschicht-Adressinformationen können auch dazu genutzt werden, die Dateneinheiten von einem ersten untergeordneten lokalen VLAN in ein zweites untergeordnetes lokales VLAN zu transportieren. Somit müssen die Sicherungsschicht-Adressinformationen nicht zwingend für die Auswahl eines Tunnels genutzt werden; sie können auch für die Auswahl eines beliebigen anderen lokalen VLANs vor dem ersten Tunnelendpunkt verwendet werden.

Es liegt im Rahmen der Erfindung, dass der zweite Tunnelendpunkt als Teil eines zweiten lokalen VLANs definiert wird. Das zweite lokale VLAN kann seinerseits hierarchisch untergeordnete weitere lokale VLANs enthalten. Mittels der Sicherungsschicht-Adressinformationen können die Dateneinheiten von dem ersten hierarchisch untergeordneten lokalen VLAN über den Tunnel in eines der weiteren, untergeordneten lokalen VLANs übertragen werden. Demzufolge können mehrere unterschiedliche Sicherungsschicht-Adressinformationen bzw. unterschiedliche Auszeichnungen bzw. unterschiedliche VLAN-Tags einem Tunnel zugeordnet werden.

Vorzugsweise ist der erste und/oder der zweite Tunnelendpunkt der einzige Tunnelendpunkt des ersten bzw. zweiten lokalen VLANs. Folglich wird der Datenstrom der lokalen VLANs durch jeweils einen Tunnelendpunkt gebündelt. Jedem lokalen VLAN wird höchstens ein Tunnelendpunkt zugeordnet. Jedem Tunnelendpunkt können mehrere lokale VLANs zugeordnet werden. Aufgrund der Bündelung fließen die Daten durch ein Minimum von Tunneln, wobei nur diese Tunnel mittels Verschlüsselung geschützt werden müssen. Folglich wird der kryptografische Aufwand minimiert.

Bevorzugt führt der Tunnel zwischen dem ersten und dem zweiten Tunnelendpunkt durch ein fremdes Netz der Vermittlungsschicht. Besonders vorzugsweise führt der Tunnel zwischen dem ersten und dem zweiten Tunnelendpunkt durch ein fremdes IP-Netz. Der Ausdruck "fremd" bedeutet, dass der Datenstrom über Rechner bzw. Netzwerkgeräte läuft, welche nicht der Kontrolle der Inhaberin der lokalen VLANs unterliegen. Insbesondere sind wenigstens das erste lokale VLAN und wenigstens das zweite lokale VLAN voneinander räumlich getrennt. Dabei meint räumliche Trennung, dass Leitungsabschnitte zwischen diesen lokalen VLANs liegen, auf welche Dritte Zugriff haben.

Es liegt im Rahmen der Erfindung, dass die Sicherungsschicht-Adressinformationen einer VLAN-basierten Weiterleitung der Dateneinheiten dienen. Die Sicherungsschicht-Adressinformationen enthalten vorzugsweise das VLAN-Tag, welches die entsprechende Ziel-ID des jeweiligen VLANs enthält. Folglich wird die Dateneinheit von VLAN zu VLAN bis zum Ziel-VLAN weitergeleitet.

Gegenstand der Erfindung ist auch ein System zur Übermittlung von Daten über Netze der Vermittlungsschicht, vorzugsweise über IP-Netze, insbesondere mit einem erfindungsgemäßen Verfahren, mit einem ersten Rechner und einem zweiten Rechner, wobei ein Tunnel der Vermittlungsschicht den ersten Rechner und den zweiten Rechner verbindet, wobei der Tunnel einen ersten Tunnelendpunkt umfasst, welcher dem ersten Rechner zugeordnet ist, wobei der Tunnel einen zweiten Tunnelendpunkt umfasst, welcher dem zweiten Rechner zugeordnet ist, wobei Dateneinheiten vom ersten Rechner zum zweiten Rechner über den Tunnel versendbar sind, wobei die Dateneinheiten Datenpakete der Vermittlungsschicht umfassen, wobei die Datenpakete der Vermittlungsschicht Kopfdaten und Nutzdaten aufweisen, dadurch gekennzeichnet, dass die Dateneinheiten vor dem Tunnelversand Sicherungsschicht-Adressinformationen aufweisen und wobei die Sicherungsschicht-Adressinformationen von dem ersten Tunnelendpunkt durch Vermittlungsschicht-Adressinformationen ersetzbar sind, wobei die Sicherungsschicht-Adressinformationen den Tunnel bestimmen und wobei der zweite Tunnelendpunkt die Sicherungsschicht-Adressinformationen rekonstruiert.

Der Erfindung liegt die Erkenntnis zu Grunde, dass das erfindungsgemäße Verfahren, bzw. das erfindungsgemäße System die Vorteile der Sicherungsschicht mit den Vorteilen der Vermittlungsschicht verbinden. Auf Grund der VLAN-basierten Weiterleitung der Dateneinheiten ist der Konfigurationsaufwand des Netzes verhältnismäßig gering und daher auch entsprechend transparent und sicher. Durch Einbindung von Tunneln der Vermittlungsschicht kann die volle Flexibilität und Kosteneffizienz von gerouteten Netzen ausgenutzt werden. Dies geschieht, indem die Sicherungsschicht-Adressinformationen während des Tunnelns durch Vermittlungsschicht-Adressinformationen ausgetauscht werden, so dass eine Verletzung des OSI-Schichtenmodells nicht stattfindet. In der Folge werden Übertragungsrisiken wie etwa Timing-Fehler oder Paketgrößenkonflikte vermieden. Dies wiederum hat zur Folge, dass die Leistungsfähigkeit des erfindungsgemäßen Verfahrens bzw. des erfindungsgemäßen Systems nicht beeinträchtigt wird. Das erfindungsgemäße Verfahren bzw. das erfindungsgemäße System simulieren über die Tunnel ein Leitungsverhalten, wodurch VLAN-basiert verschiedene lokale Netze über sichere Vermittlungsschicht-Tunnel miteinander verbunden werden. Dies ermöglicht eine sichere und gleichzeitig leistungsstarke Übermittlung von Daten.

Im Folgenden wird die Erfindung anhand einer lediglich ein Ausführungsbeispiel darstellenden Zeichnung näher erläutert. Es zeigen in schematischer Darstellung:
- Fig. 1: ein erfindungsgemäßes System in Blockdarstellung,
- Fig. 2: erfindungsgemäße Dateneinheiten vor, während und nach der Tunnelübermittlung.

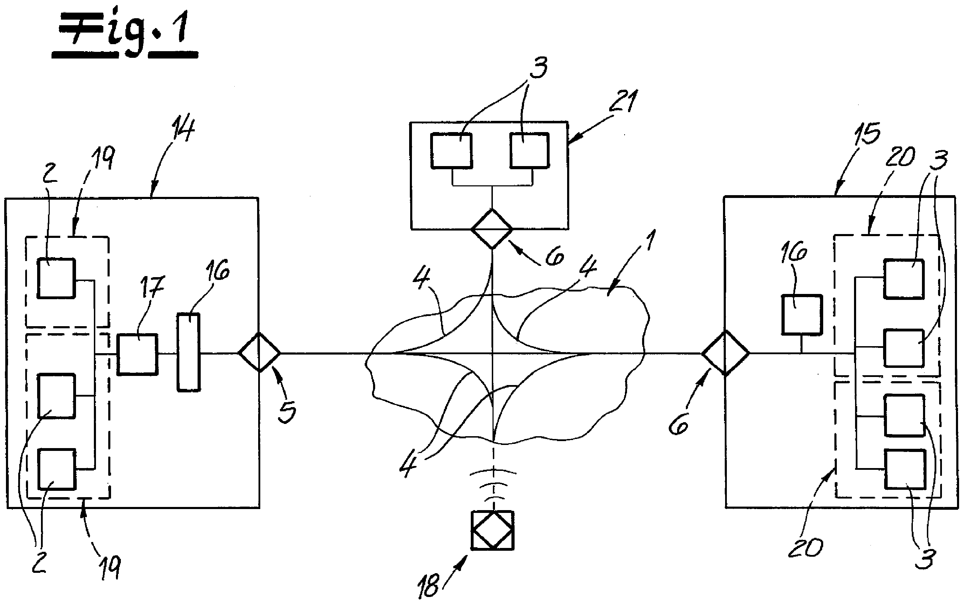

In Fig. 1 ist ein erfindungsgemäßes System dargestellt, welches erste und zweite lokale VLANs 14, 15 über erste und zweite Tunnelendpunkte 5, 6 sowie über ein Netz 1 der Vermittlungsschicht miteinander verbindet. Das Netz 1 der Vermittlungsschicht ist in diesem Fall ein fremdes IP-Netz, auf welches Dritte Zugriff haben. Die VLANs 14, 15 weisen je einen der Tunnelendpunkte 5, 6 auf, welche letztlich das Tor zu dem jeweiligen lokalen VLAN 14, 15 darstellen. Das erste lokale VLAN 14 umfasst neben dem ersten Tunnelendpunkt 5 beispielhaft einen Server 16, eine Netzwerkweiche 17 sowie zwei hierarchisch untergeordnete erste lokale VLANs 19. Die hierarchisch untergeordneten ersten lokalen VLANs 19 wiederum weisen erste Rechner 2 auf. Dies gilt analog für das zweite lokale VLAN 15, welches neben dem zweiten Tunnelendpunkt 6 einen Server 16, zweite hierarchisch untergeordnete lokale VLANs 20 sowie zweite Rechner 3 umfasst.

Dabei werden der erste 5 und der zweite Tunnelendpunkt 6 über Tunnel 4 der Vermittlungsschicht, hier IPsec-Tunnel, miteinander verbunden. Die Zahl der Tunnel bestimmt sich aus den Verbindungsmöglichkeiten von Start- und Ziel-VLANs. Mit Blick auf die VLANs 14, 15, 19, 20 ergeben sich somit insgesamt 9 Tunnel zwischen den zugehörigen Tunnelendpunkten 5, 6.

Die Daten, welche zwischen dem ersten lokalen VLAN 14 und dem zweiten lokalen VLAN 15 miteinander ausgetauscht werden, werden durch die Tunnelendpunkte 5, 6 ver- bzw. entschlüsselt. Die Rechner 2, 3 und Tunnelendpunkte 5, 6 arbeiten bidirektional, können also jeweils senden und empfangen.
Mit dem IP-Netz 1 ist zudem ein mobiles Endgerät 18 verbunden, welches zugleich Tunnelendpunkt und Rechner ist. Es ist in der Folge daher gleichzeitig auch ein eigenes lokales VLAN für sich. Ein weiteres lokales VLAN 21 weist einen Tunnelendpunkt 6 auf. An diesem zweiten Tunnelendpunkt 6 sind noch weitere Rechner 3 angeschlossen, welche innerhalb des lokalen VLANs 21 liegen. Auf Grund der Zuordnung mehrerer Tunnel 4 zu jeweils einem Tunnelendpunkt 5, 6 können, wie in Fig. 1 dargestellt, von jedem Tunnelendpunkt 5, 6 zu jedem anderen Tunnelendpunkt 5, 6 ein oder mehrere Tunnel 4 führen. Die Tunnel 4 sind dynamisch und die Dateneinheiten können daher beliebige Wegstrecken zwischen den entsprechenden Tunnelendpunkten 5, 6 zurücklegen.

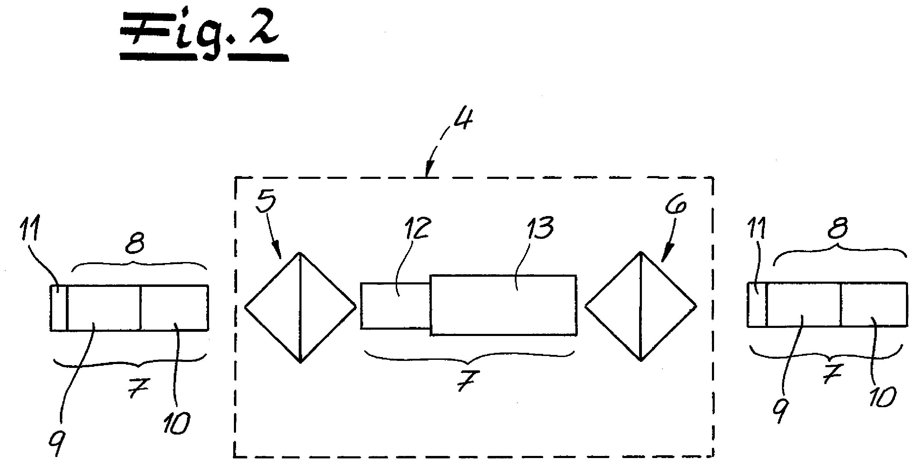

Fig. 2 zeigt im linken Abschnitt eine Dateneinheit 7 vor dem Tunnelversand. Die Dateneinheit 7 umfasst ein Datenpaket 8 der Vermittlungsschicht, welches Datenpaket 8 sowohl Kopfdaten 9 als auch Nutzdaten 10 enthält. Dem Datenpaket 8 sind Sicherungsschicht-Adressinformationen 11 in Form eines VLAN-Tags nach IEEE 802.1Q vorangestellt.

In der Mitte der Fig. 2 wird durch die gestrichelte Linie ein Tunnel 4 symbolisiert. Der Tunnel 4 wird definiert durch die Tunnelendpunkte 5, 6, zwischen denen die Dateneinheiten 7 ausgetauscht werden. Der erste Tunnelendpunkt 5 hat nach Erhalt der Dateneinheit 7 die Sicherungsschicht-Adressinformationen 11 aus der Dateneinheit entfernt und das Datenpaket 8 zu einem Informationsblock 13 verschlüsselt. Ferner wurden dem Informationsblock 13 Vermittlungsschicht-Adressinformationen 12 in Form von IPsec-Kopfdaten vorangestellt. Mittels der IPsec-Kopfdaten werden die Dateneinheiten 7 per Routing dynamisch an den zweiten Tunnelendpunkt 6 geleitet.

Der zweite Tunnelendpunkt 6 schließlich entfernt die IPsec-Kopfdaten nach Abschluss des Routing-Prozesses innerhalb des Tunnels 4 wieder (rechter Abschnitt der Fig. 2). Ebenso wurde der Informationsblock 13 wieder entschlüsselt. Dem so gewonnenen Datenpaket 8 werden durch Rekonstruktion der Sicherungsschicht-Adressinformationen 11 dieselbigen wieder vorangestellt. Die Rekonstruktion geschieht in Kenntnis des Tunnels 4, also in Kenntnis der Kombination aus Start-VLAN und Ziel-VLAN. Im Ergebnis liegt nach der Übermittlung durch den Tunnel 4 die gleiche bzw. fast die gleiche Dateneinheit 7 vor wie vor der Tunnelübertragung.

Mittels der rekonstruierten Sicherungsschicht-Adressinformation 11 kann die Dateneinheit 7 nun weiter an das Ziel-VLAN geleitet werden. Die Kopfdaten 9 des Datenpakets 8 ermöglichen schließlich die Weiterleitung des Datenpakets 8 an den zweiten Rechner 3.

## Patentansprüche

1. Übermittlungsverfahren für Netze (1) der Vermittlungsschicht, vorzugsweise für IP-Netze,
mit einem ersten Rechner (2) und einem zweiten Rechner (3),
wobei ein Tunnel (4) der Vermittlungsschicht zwischen dem ersten Rechner (2) und dem zweiten Rechner (3) definiert wird,
wobei der Tunnel (4) einen ersten Tunnelendpunkt (5) umfasst, welcher dem ersten Rechner (2) zugeordnet ist,
wobei der Tunnel einen zweiten Tunnelendpunkt (6) umfasst, welcher dem zweiten Rechner (3) zugeordnet ist,
wobei der erste Rechner (2) Dateneinheiten (7) an den zweiten Rechner (3) über den Tunnel (4) versendet,
wobei die Dateneinheiten (7) Datenpakete (8) der Vermittlungsschicht umfassen,
wobei die Datenpakete (8) der Vermittlungsschicht Kopfdaten (9) und Nutzdaten (10) aufweisen,
die Dateneinheiten (7) vor dem Tunnelversand mit Sicherungsschicht-Adressinformationen (11) versehen werden,
dass die Sicherungsschicht-Adressinformationen (11) von dem ersten Tunnelendpunkt (5) durch Vermittlungsschicht-Adressinformationen (12) ersetzt werden-,
dass die Datenpakete (8) vom ersten Tunnelendpunkt (5) verschlüsselt werden und wobei die Datenpakete (8) vom zweiten Tunnelendpunkt (6) entschlüsselt werden,
dass die Vermittlungsschicht-Adressinformationen (12) von dem zweiten Tunnelendpunkt (6) aus der Dateneinheit (7) entfernt werden,
wobei die Sicherungsschicht-Adressinformationen (11) von dem zweiten Tunnelendpunkt (6) rekonstruiert werden,
wobei die Rekonstruktion aus der Kenntnis des zweiten Tunnelendpunktes (6) von dem Tunnel (4) geschieht,
wobei die Sicherungsschicht-Adressinformationen (11) den Datenpaketen (8) vorangestellt werden.

2. Übermittlungsverfahren nach Anspruch 1, wobei die Sicherungsschicht-Adressinformationen (11) vor dem Tunnelversand den Datenpaketen (8) vorangestellt werden.

3. Übermittlungsverfahren nach Anspruch 1 oder 2, wobei die Dateneinheiten (7) anhand von den Sicherungsschicht-Adressinformationen (11) zu dem Tunnel (4) geführt werden.

4. Übermittlungsverfahren nach einem der Ansprüche 1 bis 3, wobei die Sicherungsschicht-Adressinformationen (11) eine standardisierte Auszeichnung und vorzugsweise ein VLAN-Tag eines Ethernet-Headers entsprechend IEEE 802.1Q umfassen.

5. Übermittlungsverfahren nach einem der Ansprüche 1 bis 4, wobei der Tunnel (4) als ein IP-Tunnel, vorzugsweise als ein IPsec-Tunnel und besonders vorzugsweise als ein IPsec-Tunnel mit einer Schlüsselverwaltung nach IKEv2, ausgebildet wird.

6. Übermittlungsverfahren nach einem der Ansprüche 1 bis 5, wobei der erste Tunnelendpunkt (5) als Teil eines ersten lokalen VLANs (14) definiert wird.

7. Übermittlungsverfahren nach einem der Ansprüche 1 bis 6, wobei der zweite Tunnelendpunkt (6) als Teil eines zweiten lokalen VLANs (15) definiert wird.

8. Übermittlungsverfahren nach einem der Ansprüche 1 bis 7, wobei der erste (5) und/oder der zweite Tunnelendpunkt (6) der einzige Tunnelendpunkt des ersten (14) bzw. zweiten lokalen VLANs (15) ist.

9. Übermittlungsverfahren nach einem der Ansprüche 1 bis 8, wobei der Tunnel (4) zwischen dem ersten (5) und dem zweiten Tunnelendpunkt (6) durch ein fremdes Netz (1) der Vermittlungsschicht und vorzugsweise durch ein fremdes IP-Netz führt.

10. Übermittlungsverfahren nach einem der Ansprüche 1 bis 9, wobei die Sicherungsschicht-Adressinformationen (11) einer VLAN-basierten Weiterleitung der Dateneinheiten (7) dienen.

11. System zur Übermittlung von Daten über Netze (1) der Vermittlungsschicht, vorzugsweise über IP-Netze, insbesondere mit einem Verfahren nach einem der Ansprüche 1 bis 10,
mit einem ersten Rechner (2) und einem zweiten Rechner (3),
wobei ein Tunnel (4) der Vermittlungsschicht den ersten Rechner (2) und den zweiten Rechner (3) verbindet,
wobei der Tunnel (4) einen ersten Tunnelendpunkt (5) umfasst, welcher dem ersten Rechner (2) zugeordnet ist,
wobei der Tunnel (4) einen zweiten Tunnelendpunkt (6) umfasst, welcher dem zweiten Rechner (3) zugeordnet ist,
wobei Dateneinheiten (7) vom ersten Rechner (2) zum zweiten Rechner (3) über den Tunnel (4) versendbar sind,
wobei die Dateneinheiten (7) Datenpakete (8) der Vermittlungsschicht umfassen,
wobei die Datenpakete (8) der Vermittlungsschicht Kopfdaten (9) und Nutzdaten (10) aufweisen,
die Dateneinheiten (7) vor dem Tunnelversand Sicherungsschicht-Adressinformationen (11) aufweisen,
dass die Sicherungsschicht-Adressinformationen (11) von dem ersten Tunnelendpunkt (5) durch Vermittlungsschicht-Adressinformationen (12) ersetzbar sind,
dass die Datenpakete (8) vom ersten Tunnelendpunkt (5) verschlüsselt werden und wobei die Datenpakete (8) vom zweiten Tunnelendpunkt (6) entschlüsselt werden,
dass die Vermittlungsschicht-Adressinformationen (12) von dem zweiten Tunnelendpunkt (6) aus der Dateneinheit (7) entfernt werden,
wobei die Sicherungsschicht-Adressinformationen (11) von dem zweiten Tunnelendpunkt (6) rekonstruiert werden,
wobei die Rekonstruktion aus der Kenntnis des zweiten Tunnelendpunktes (6) von dem Tunnel (4) geschieht,
wobei die Sicherungsschicht-Adressinformationen (11) den Datenpaketen (8) vorangestellt werden.

## Claims

1. A transfer method for networks (1) of the network layer, preferably for IP networks, with a first computer (2) and a second computer (3),
wherein a tunnel (4) of the network layer is defined between the first computer (2) and the second computer (3),
wherein the tunnel (4) comprises a first tunnel end point (5) which is assigned to the first computer (2),
wherein the tunnel comprises a second tunnel end point (6) which is assigned to the second computer (3),
wherein the first computer (2) sends data units (7) to the second computer (3) via the tunnel (4),
wherein the data units (7) are data packets (8) of the network layer,
wherein the data packets (8) of the network layer comprise header data (9) and payload data (10),
the data units (7), prior to transfer through the tunnel (4), are provided with data link layer address information (11),
the data link layer address information (11) is replaced by network layer address information (12) by the first tunnel end point (5),
the data packets (8) are encrypted by the first tunnel end point (5) and wherein the data packets (8) are decrypted by the second tunnel end point (6),
the network layer address information (12) is removed from the data unit (7) by the second tunnel end point (6),
wherein the data link layer address information (11) is reconstructed by the second tunnel end point (6),
wherein the reconstruction is effected based on the second tunnel end point's (6) knowledge of the tunnel (4),
wherein the data link layer address information (11) is put in front of the data packets (8).

2. The transfer method according to claim 1, wherein the data link layer address information (11), prior to transfer through the tunnel, is put in front of the data packets (8).

3. The transfer method according to claim 1 or 2, wherein the data units (7) are guided to the tunnel (4) by way of the data link layer address information (11).

4. The transfer method according to one of claims 1 to 3, wherein the data link layer address information (11) includes a standardised label and preferably a VLAN tag of an Ethernet header in accordance with IEEE 802.1Q.

5. The transfer method according to one of claims 1 to 4, wherein the tunnel (4) is configured as an IP tunnel, preferably an IPsec tunnel and especially preferably an IPsec tunnel with key management according to IKEv2.

6. The transfer method according to one of claims 1 to 5, wherein the first tunnel end point (5) is defined as part of a first local VLAN (14).

7. The transfer method according to one of claims 1 to 6, wherein the second tunnel end point (6) is defined as part of a second VLAN (15).

8. The transfer method according to one of claims 1 to 7, wherein the first (5) and/or the second tunnel end point (6) is the only tunnel end point of the first (14) / the second local VLAN (15).

9. The transfer method according to one of claims 1 to 8, wherein the tunnel (4) between the first (5) and the second tunnel end point (6) leads through a foreign network (1) of the network layer and preferably through a foreign IP network.

10. The transfer method according to one of claims 1 to 9, wherein the data link layer address information (11) serves a VLAN-based forwarding of the data units (7).

11. A system for the transfer of data via networks (1) of the network layer, preferably via IP networks, in particular using a method according to one of claims 1 to 10,
with a first computer (2) and a second computer (3), wherein a tunnel (4) of the network layer connects the first computer (2) and the second computer (3),
wherein the tunnel (4) comprises a first tunnel end point (5), which is assigned to the first computer (2),
wherein the tunnel (4) comprises a second tunnel end point (6), which is assigned to the second computer (3),
wherein data units (7) can be transferred from the first computer (2) to the second computer (3) via the tunnel (4),
wherein the data units (7) are data packets (8) of the network layer,
wherein the data packets (8) of the network layer comprise header data (9) and payload data (10),
the data units (7), prior to transfer through the tunnel, comprise data link layer address information (11),
the data link layer address information (11) can be replaced by network layer address information (12) by the first tunnel end point (5),
the data packets (8) are encrypted by the first tunnel end point (5) and wherein the data packets (8) are decrypted by the second tunnel end point (6),
the network layer address information (12) is removed from the data unit (7) by the second tunnel end point (6),
wherein the data link layer address information (11) is reconstructed by the second tunnel end point (6),
wherein the reconstruction is effected based on the second tunnel end point's (6) knowledge of the tunnel (4),
wherein the data link layer address information (11) is put in front of the data packets (8).

## Revendications

1. Procédé de transmission pour réseaux (1) de la couche réseau, de préférence pour réseaux IP, avec un premier calculateur (2) et un deuxième calculateur (3),
dans lequel un tunnel (4) de la couche réseau est défini entre le premier calculateur (2) et le deuxième calculateur (3),
dans lequel le tunnel (4) comprend un premier point de fin de tunnel (5) associé au premier calculateur (2),
dans lequel le tunnel comprend un deuxième point de fin de tunnel (6) associé au deuxième calculateur (3),
dans lequel le premier calculateur (2) envoie des unités de données (7) au deuxième calculateur (3) via le tunnel (4),
dans lequel les unités de données (7) comprennent des paquets de données (8) de la couche réseau,
dans lequel les paquets de données (8) de la couche réseau présentent des données d'en-tête (9) et des données utiles (10),
les unités de données (7) étant dotées d'informations d'adresse de couche liaison de données (11) avant l'envoi par le tunnel,
les informations d'adresse de couche liaison de données (11) étant remplacées, par le premier point de fin de tunnel (5), par des informations d'adresse de couche réseau (12),
les paquets de données (8) étant codés par le premier point de fin de tunnel (5) et dans lequel les paquets de données (8) sont décodés par le deuxième point de fin de tunnel (6),
les informations d'adresse de couche réseau (12) étant éliminées de l'unité de données (7) par le deuxième point de fin de tunnel (6),
dans lequel les informations d'adresse de couche liaison de données (11) sont reconstituées par le deuxième point de fin de tunnel (6),
dans lequel la reconstitution s'effectue par le tunnel (4) à partir de la connaissance du deuxième point de fin de tunnel (6),
dans lequel les informations d'adresse de couche liaison de données (11) précèdent les paquets de données (8).

2. Procédé de transmission selon la revendication 1, dans lequel les informations d'adresse de couche liaison de données (11) précèdent les paquets de données (8) avant l'envoi par le tunnel.

3. Procédé de transmission selon la revendication 1 ou 2, dans lequel les unités de données (7) sont menées à l'aide des informations d'adresse de couche liaison de données (11) vers le tunnel (4).

4. Procédé de transmission selon l'une des revendications 1 à 3, dans lequel les informations d'adresse de couche liaison de données (11) comprennent un marquage standardisé et de préférence une balise VLAN d'un entête Ethernet conformément à IEEE 802.1Q.

5. Procédé de transmission selon l'une des revendications 1 à 4, dans lequel le tunnel (4) est réalisé en tant qu'un tunnel IP, de préférence en tant qu'un tunnel IPsec et de manière particulièrement préférée, en tant qu'un tunnel IPsec avec une gestion de clés selon IKEv2.

6. Procédé de transmission selon l'une des revendications 1 à 5, dans lequel le premier point de fin de tunnel (5) est défini en tant que partie d'un premier VLAN local (14).

7. Procédé de transmission selon l'une des revendications 1 à 6, dans lequel le deuxième point de fin de tunnel (6) est défini en tant que partie d'un deuxième VLAN local (15).

8. Procédé de transmission selon l'une des revendications 1 à 7, dans lequel le premier (5) et/ou le deuxième point de fin de tunnel (6) est l'unique point de fin de tunnel du premier (14) ou deuxième VLAN local (15).

9. Procédé de transmission selon l'une des revendications 1 à 8, dans lequel le tunnel (4) entre le premier (5) et le deuxième point de fin de tunnel (6) passe par un réseau étranger (1) de la couche réseau, et de préférence par un réseau IP étranger.

10. Procédé de transmission selon l'une des revendications 1 à 9, dans lequel les informations d'adresse de couche liaison de données (11) servent à une retransmission basée sur VLAN des unités de données (7).

11. Système pour la transmission de données via des réseaux (1) de la couche réseau, de préférence via des réseaux IP, en particulier avec un procédé selon l'une des revendications 1 à 10,
avec un premier calculateur (2) et un deuxième calculateur (3),
dans lequel un tunnel (4) de la couche réseau relie le premier calculateur (2) et le deuxième calculateur (3),
dans lequel le tunnel (4) comprend un premier point de fin de tunnel (5) associé au premier calculateur (2),
dans lequel le tunnel (4) comprend un deuxième point de fin de tunnel (6) associé au deuxième calculateur (3),
dans lequel des unités de données (7) peuvent être envoyées du premier calculateur (2) au deuxième calculateur (3) via le tunnel (4),
dans lequel les unités de données (7) comprennent des paquets de données (8) de la couche réseau,
dans lequel les paquets de données (8) de la couche réseau présentent des données d'en-tête (9) et des données utiles (10),
les unités de données (7) présentant des informations d'adresse de couche liaison de données (11) avant l'envoi par le tunnel,
les informations d'adresse de couche liaison de données (11) pouvant être remplacées, par le premier point de fin de tunnel (5), par des informations d'adresse de couche réseau (12),
les paquets de données (8) étant codés par le premier point de fin de tunnel (5) et dans lequel les paquets de données (8) sont décodés par le deuxième point de fin de tunnel (6),
les informations d'adresse de couche réseau (12) étant éliminées de l'unité de données (7) par le deuxième point de fin de tunnel (6),
dans lequel les informations d'adresse de couche liaison de données (11) sont reconstituées par le deuxième point de fin de tunnel (6),
dans lequel la reconstitution s'effectue par le tunnel (4) à partir de la connaissance du deuxième point de fin de tunnel (6),
dans lequel les informations d'adresse de couche liaison de données (11) précèdent les paquets de données (8).
